(19) Europäisches Patentamt
European Patent Office
Office européen des brevets

(11) **EP 2 323 407 A1**

(12) **EUROPEAN PATENT APPLICATION**
published in accordance with Art. 153(4) EPC

(43) Date of publication:
 **18.05.2011 Bulletin 2011/20**

(51) Int Cl.:
 ***H04N 7/50*** *(2006.01)*

(21) Application number: **09773192.1**

(22) Date of filing: **02.07.2009**

(86) International application number:
 **PCT/JP2009/003086**

(87) International publication number:
 **WO 2010/001614 (07.01.2010 Gazette 2010/01)**

(84) Designated Contracting States:
 **AT BE BG CH CY CZ DE DK EE ES FI FR GB GR HR HU IE IS IT LI LT LU LV MC MK MT NL NO PL PT RO SE SI SK SM TR**
 Designated Extension States:
 **AL BA RS**

(30) Priority: **03.07.2008 EP 08012036**

(71) Applicant: **Panasonic Corporation**
 **Kadoma-shi**
 **Osaka 571-8501 (JP)**

(72) Inventors:
 • **NARROSCHKE, Matthias**
  **63225 Langen (DE)**
 • **WITTMANN, Steffen**
  **63225 Langen (DE)**
 • **WEDI, Thomas**
  **63225 Langen (DE)**

(74) Representative: **Grünecker, Kinkeldey,**
 **Stockmair & Schwanhäusser**
 **Anwaltssozietät**
 **Leopoldstrasse 4**
 **80802 München (DE)**

(54) **VIDEO IMAGE ENCODING METHOD, VIDEO IMAGE DECODING METHOD, VIDEO IMAGE ENCODING APPARATUS, VIDEO IMAGE DECODING APPARATUS, PROGRAM AND INTEGRATED CIRCUIT**

(57)     A video coding method according to the present invention is for coding a signal to be coded which represents a video, and includes: generating a prediction signal predictive of the signal to be coded, based on a coded signal coded prior to the coding of the signal to be coded (S16); quantizing a prediction error obtained by subtracting the prediction signal from the signal to be coded to generate quantized coefficients (S12); inversely quantizing the quantized coefficients to generate a quantized prediction error signal (S13); generating first filter information, based on statistical properties of only the prediction signal among the prediction signal and the quantized prediction error signal, and generating second filter information, based on statistical properties of only the quantized prediction error signal among the prediction signal and the quantized prediction error signal (S14); and performing entropy coding on the quantized coefficients generated in the quantizing and the first and second filter information generated in the generating of filter information so as to generate a coded signal (S15).

FIG. 3B

EP 2 323 407 A1

**Description**

[Technical Field]

The present invention relates to filters for video coding, in particular to filters applied to a signal reconstructed from a prediction signal and a quantized prediction error signal in the context of differential pulse code modulation.

[Background Art]

For the compression of video data, a plurality of video coding standards has been developed. Such video standards are, for instance, ITU-T standards denoted with H.26x and ISO/IEC standards denoted with MPEG-x. The most up-to-date and advanced video coding standard is currently the standard denoted as H.264/MPEG-4 AVC.
All of these standards are based on hybrid video coding, which consists of the following main stages:

(a) Dividing each individual video frame into two-dimensional blocks of pixels in order to subject each video frame to data compression at a block level.
(b) Decorrelating spatiotemporal video information by applying a spatio-temporal prediction scheme to each block and by transforming the prediction error from the spatial domain into the frequency domain so as to obtain coefficients.
(c) Reducing the overall amount of data by quantizing the resulting coefficients.
(d) Compressing the remaining data by coding the quantized coefficients and prediction parameters by means of an entropy coding algorithm.

Hence, state-of-the-art video standards employ a Differential Pulse Code Modulation (DPCM) approach which only transmits differences between blocks of an input video sequence and their predictions based on previously coded blocks ("the locally decoded image"). One of the prediction schemes that may be employed by these video coding standards is motion compensated prediction. In this prediction scheme, at least one motion vector is determined for each block of video data in order to describe image displacements caused by an object and/or camera movements. Based on the motion vectors determined, the image content of one block may be predicted at least to a certain extend from the image content of previously coded blocks. The difference between the predicted image content and the actual input image content is called the prediction error, which is then coded together with the motion vectors rather than the actual input image content. In this manner, a substantial reduction in the amount of information to be coded can be achieved for most "natural" video sequences.

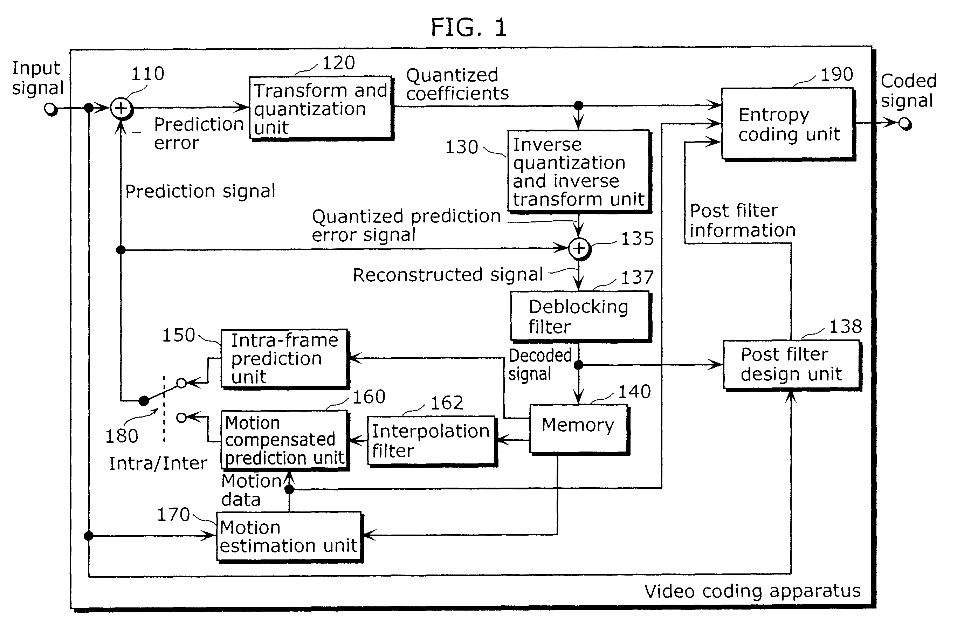

FIG. 1 is an exemplary block diagram of a conventional video coding apparatus, which is in accordance with the H.264/AVC standard. The video coding apparatus includes a subtractor 110 for determining differences between a current block of a video image (input signal) and a prediction signal of the current block which is obtained based on previously coded blocks ("the locally decoded image") stored in a memory 140. The memory unit 140 thus operates as a delay unit that allows a comparison between current signal values and a prediction signal generated from previous signal values. A transform and quantization unit 120 transforms the resulting prediction error from the spatial domain to the frequency domain and quantizes the obtained coefficients. An entropy coding unit 190 performs entropy coding on the quantized coefficients.
The locally decoded image is provided by a decoding unit incorporated into video coding apparatus. The decoding unit performs the coding steps in reverse manner. An inverse quantization and inverse transform unit 130 inversely quantizes the quantized coefficients and applies an inverse transform to the inversely quantized coefficients. In an adder 135, the decoded differences are added to the prediction signal to form the locally decoded image.
Due to the quantization, quantization noise is superimposed to the reconstructed video signal. Due to the blockwise coding, the superimposed noise often has blocking characteristics, which may be subjectively annoying. In order to reduce the blocking characteristics, a deblocking filter 137 is applied to every reconstructed macroblock. The deblocking filter 137 is applied on the reconstructed signal, which is the sum of the prediction signal and the quantized prediction error signal. The deblocked signal is the decoded signal, which is generally displayed. The deblocking filter 137 in H.264/AVC has the capability of local adaptation. In the case of a high degree of blocking noise, a strong low pass filter is applied whereas for a low degree of blocking noise, a weak low pass filter is applied. The strength of the low pass filter is determined by the prediction signal and by the quantized prediction error signal. This deblocking filter 137 has the following two benefits:
1. Block edges are smoothed resulting in an enhanced subjective quality of decoded images.
2. Since the filtered macroblock is used for the motion compensated prediction of further images, the filtering may result in smaller prediction errors and thus in increased coding efficiency.
Intra-coded macroblocks are a specific case in this context; they are filtered before display, but intra prediction is carried out using the unfiltered reconstructed macroblocks.

As an example for deblocking at a vertical block boundary, a linear deblocking filter with four coefficients is provided. This filter is applied to input samples $p_2$, $p_1$, $p_0$, $q_0$, $q_1$ and $q_2$, wherein $p_0$ and $q_0$ are two adjacent pixels at the block boundary, $p_1$ and $q_1$ pixels adjacent to $p_0$ and $q_0$, and so on. The filter output $p_0$, new and $q_0$, new is then defined as $p_0$, new = $(p_2 - (p_1 << 1) + (p_0 + q_0 + 1) >> 1) >> 1$ and $q_0$, new = $(q_2 - (q_1 << 1) + (q_0 + P_0 + 1) >> 1) >> 1$.

The type of prediction that is employed by video coding apparatus 100 depends on whether the macroblocks are coded in "Intra" or "Inter" mode. In "Intra" mode, the video coding standard H.264/AVC uses a prediction scheme based on already coded macroblocks of the same image in order to predict subsequent macroblocks. In "Inter" mode, motion compensated prediction between corresponding blocks of several consecutive frames is employed.

Only Intra-coded images (I-type images) can be decoded without reference to any previously decoded image. The I-type images provide error resilience for the coded video sequence. Further, entry points into bit streams of coded data are provided by the I-type images in order to enable a random access, that is, to access I-type images within the sequence of coded video images. A switch between Intra-mode, that is, processing by Intra-frame prediction unit 150, and Inter-mode, that is, processing by motion compensated prediction unit 160, is controlled by Intra/Inter switch 180.

In "Inter" mode, a macroblock is predicted from corresponding blocks of previous frames by employing motion compensated prediction. The estimation is accomplished by a motion estimation unit 170, receiving the current input signal and the locally decoded image. Motion estimation yields two-dimensional motion vectors, representing displacements between the current block and the corresponding block in already decoded frames. Based on the estimated motion, a motion compensated prediction unit 160 provides a prediction signal.

In order to optimize prediction accuracy, motion vectors may be determined at sub-pel resolution, for example, half-pel or quarter-pel resolution. A motion vector with sub-pel resolution may point to a position, within an already decoded frame, in which no pixel value is available, that is, a sub-pel position. Hence, spatial interpolation of pixel values is needed in order to perform motion compensation. This is achieved by interpolation filter 162. According to the H. 264/AVC standard, a 6-tap Wiener interpolation filter with fixed filter coefficients and a bilinear filter are applied in order to obtain pixel values for sub-pel positions.

For both the "Intra" and the "Inter" coding mode, the differences between the current input signal and the prediction signal are transformed and quantized by a transform and quantization unit 120 resulting in quantized coefficients. Generally, an orthogonal transform such as a two-dimensional Discrete Cosine transform (DCT) or an integer version thereof is employed.

The coefficients are quantized in order to reduce the amount of data that has to be coded. The step of quantization is controlled by quantization tables that specify the precision and therewith the number of bits that are used to code each quantized coefficient. Lower frequency components are usually more important for picture quality than high frequency components so that more bits are spent for coding the low frequency components than for the higher ones.

After quantization, the two-dimensional array of quantized coefficients has to be converted into a one-dimensional string to pass it to the entropy encoder. This conversion is done by scanning the array in a predetermined sequence. The thus obtained one-dimensional sequence of quantized coefficients is compressed and coded by an entropy coding unit 190 by means of a variable length code (VLC). The resulting bit stream is multiplexed with the motion information and stored on a recording medium or transmitted to the video decoding apparatus side.

In order to enhance the subjective picture quality, a so-called post filter may be applied at the video decoding apparatus side. The standard H.264/AVC allows sending of post filter information for such a post filter by the use of an SEI (Supplemental Enhancement Information) message. The post filter information may be either the filter coefficients themselves or cross-correlation information which can be used to calculate the filter coefficients. The post filter information is determined on the video coding apparatus side by means of a post filter design unit 138, which compares the locally decoded signal and the original input signal. The output of the post filter design unit 138 is also fed to the entropy coding unit 190 in order to be coded and inserted into the coded signal.

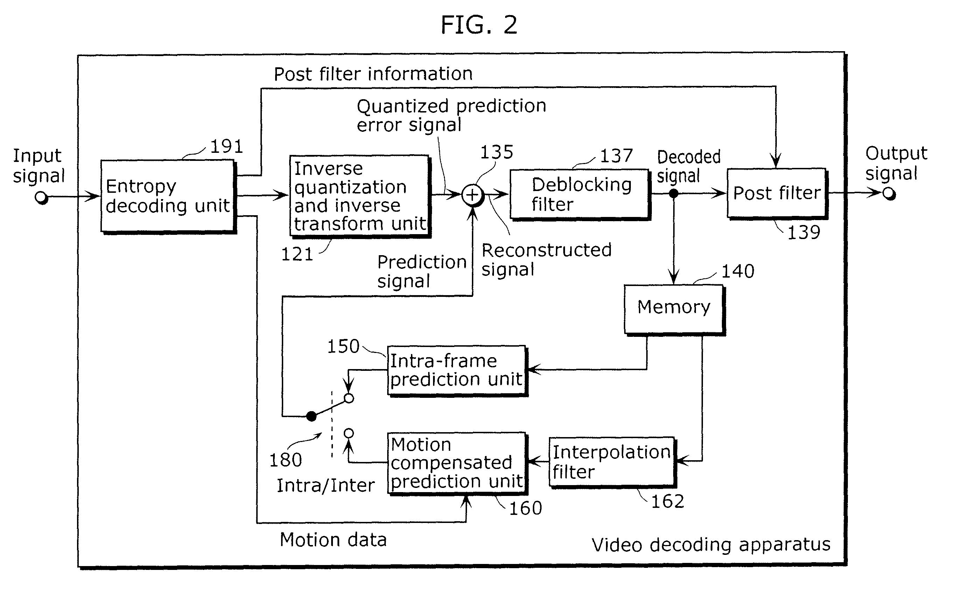

To reconstruct the coded images at the video decoding apparatus side, the coding processing is applied in reverse manner. FIG. 2 is a schematic block diagram illustrating the configuration of the corresponding video decoding apparatus.

In the video decoding apparatus in FIG. 2, first the entropy coding of coefficients and motion data are reversed in an entropy decoding unit 191. This step also involves an inverse scanning in order to convert the string of decoded coefficients into a two-dimensional array of data as it is required for the inverse transform. The decoded block of quantized coefficients is then submitted to an inverse quantization and inverse transform unit 121 and the decoded motion data is sent to a motion compensated prediction unit 160. Depending on the actual value of the motion vector, interpolation of pixel values may be needed in order to perform the motion compensated prediction. This interpolation is performed by interpolation filter 162.

The result of the inverse transform is the quantized prediction error in the spatial domain, which is added by adder 135 to the prediction signal stemming from the motion compensated prediction unit 160 in inter mode or stemming from an intra-frame prediction unit 150 in intra mode. The reconstructed image may be passed through a deblocking filter 137 and the resulting decoded signal is stored in memory 140 to be applied to an intra-frame prediction unit 150 and a motion compensated prediction unit 160.

The entropy decoding unit 191 is also retrieving the post filter information determined by the encoder. The post filter unit 139 employs this information in order to set up a post filter that is applied to the decoded signal in order to further enhance the picture quality.

The above described conventional post filter is an example of an adaptive filter, namely of a filter that is adapted to the properties of the video signal that is to be coded. Many implementations of such an adaptive filter are based on Wiener filters, that is, on linear optimum time-discrete filters. In the context of video coding, the quantization error can be considered as noise superimposed on the original video input signal. In the context of video coding, the quantization error can be considered as noise superimposed on the original video input signal.

One of the advantages of the Wiener filter approach is that the filter coefficients can be determined from the auto-correlation of the corrupted signal (decoded video signal) and the cross-correlation between the corrupted signal and the desired signal (original video input signal). More specifically, if R denotes the MxM auto-correlation matrix of the corrupted signal and p denotes the Mx1 cross-correlation vector between the corrupted signal and the desired signal, wherein M is the length of the Wiener filter, then the Mx1 vector of optimum Wiener filter coefficient w is given as

[Math.]

$$w = R^{-1} \cdot p$$
Expression 1

wherein $R^{-1}$ is the inverse of the auto-correlation matrix R.

From reference European Patent Application Publication No. 1841230 (Patent Literature 1), for instance, it is known to apply adaptive filters within the prediction loop, namely to the reconstructed signal directly before or instead of the deblocking filter 137, to the output of the deblocking filter, or to the prediction signal. The purpose of these conventional video filters is to minimize the mean squared prediction error and/or the mean squared reconstruction error and/or to deblock the image so as to enhance subjective picture quality.

[Citation List]

[Patent Literature 1]

European Patent Application Publication No. 1841230

[Summary of Invention]

[Technical Problem]

However, this filtering is effective only when a prediction signal and a quantized prediction error signal have the same statistical properties. When a prediction signal and a quantized prediction error signal have different statistical properties such as different superimposed noise, this filtering format cannot support such difference in the statistical properties, and thus the filtering design is disadvantageous.

Some reasons for such difference in the statistical properties between the prediction signal and the quantized prediction error signal are conceivable. First, quantization noise is superimposed only on the prediction error during the quantization, but not on the prediction signal itself at a certain point of time. The prediction signal may include quantization noise at a different point of time, and therefore may have different statistical properties. Second, the edges of blocks in motion compensated prediction may be different from the edges of blocks in prediction error coding, and the image may have different blocking characteristics in the prediction signal compared to the image of the quantized prediction error signal.

The aim of the present invention is to provide methods for video coding with increased coding efficiency and corresponding apparatuses.

[Solution to Problem]

A video coding method according to an embodiment of the present invention is for coding a signal to be coded which represents a video. More specifically, the video coding method includes: generating a prediction signal predictive of the signal to be coded, based on a coded signal coded prior to the coding of the signal to be coded; quantizing a prediction error obtained by subtracting the prediction signal from the signal to be coded to generate quantized coefficients; inversely quantizing the quantized coefficients to generate a quantized prediction error signal; generating first filter information, based on statistical properties of only the prediction signal among the prediction signal and the quantized prediction error signal, and generating second filter information, based on statistical properties of only the quantized prediction error signal among the prediction signal and the quantized prediction error signal; and performing entropy coding on the quantized coefficients generated in the quantizing and the first and second filter information generated in the generating of filter information so as to generate a coded signal.

With this configuration, it is possible to individually remove the noise to be superimposed on the prediction signal and the quantized prediction error signal. As a result, it is possible to increase the coding efficiency.

In addition, in the generating of filter information, the first and second filter information may be generated so as to minimize a difference between (I) the signal to be coded, and (II) a reconstructed signal obtained by adding (II-i) a filtered prediction signal obtained by filtering the prediction signal based on the first filter information, and (II-ii) a filtered quantized prediction error signal obtained by filtering the quantized prediction error signal based on the second filter information. This makes it possible to enhance the subjective picture quality of the decoded image.

In addition, the generating of a prediction signal may include: filtering the prediction signal based on the first filter information to generate a filtered prediction signal, filtering the quantized prediction error signal based on the second filter information to generate a filtered quantized prediction error signal, and generating a reconstructed signal by adding the filtered prediction signal and the filtered quantized prediction error signal; and generating a second prediction signal predictive of a signal to be coded subsequent to the coding of the signal to be coded, based on the reconstructed signal. As in the configuration, it is also good to apply a loop filter to the first and second filter information.

As an embodiment, in the filtering, deblocking of the reconstructed signal is performed so as to reduce block distortion. As another Embodiment, interpolation filtering is performed prior to the motion compensated prediction in the filtering.

In addition, in the generating of filter information, third filter information may be generated based on statistical properties of a reconstructed signal obtained by adding the prediction signal and the quantized prediction error signal, and in the performing of entropy coding, entropy coding may be performed on the quantized prediction error signal, and the first, second, and third filter information so as to generate the coded signal. As in the configuration, it is also good to generate third filter information to be used by a conventional post filter, in addition to the first and second filter information.

A video decoding method according to an embodiment of the present invention is for generating a decoded signal by decoding a coded signal which represents a video. More specifically, the video decoding method includes: performing entropy decoding on the coded signal to obtain quantized coefficients and first and second filter information; inversely quantizing the quantized coefficients to generate a quantized prediction error signal; generating a prediction signal predictive of the decoded signal, based on a decoded signal decoded prior to the decoding of the coded signal; and filtering the prediction signal based on the first filter information to generate a filtered prediction signal, filtering the quantized prediction error signal based on the second filter information to generate a filtered quantized prediction error signal, and generating the decoded signal by adding the filtered prediction signal and the filtered quantized prediction error signal.

With this configuration, it is possible to individually remove the noise to be superimposed on the prediction signal and the quantized prediction error signal. Thereby, it is possible to enhance the subjective picture quality.

In addition, the generating of a prediction signal may include: filtering the prediction signal based on the first filter information to generate a filtered prediction signal, filtering the quantized prediction error signal based on the second filter information to generate a filtered quantized prediction error signal, and generating a reconstructed signal by adding the filtered prediction signal and the filtered quantized prediction error signal; and generating a second prediction signal predictive of a signal to be coded subsequent to the coding of the signal to be coded, based on the reconstructed signal. As in the configuration, it is also good to apply a loop filter to the first and second filter information without being limited to a post filter.

A video coding apparatus according to an embodiment of the present invention codes a signal to be coded which represents a video. More specifically, the video coding apparatus includes: a prediction signal generation unit configured to generate a prediction signal predictive of the signal to be coded, based on a coded signal coded prior to the coding of the signal to be coded; a quantization unit configured to quantize a prediction error obtained by subtracting the prediction signal from the signal to be coded to generate quantized coefficients; an inverse quantization unit configured to inversely quantize the quantized coefficients to generate a quantized prediction error signal; a filter information generation unit configured to generate first filter information, based on statistical properties of only the prediction signal among the prediction signal and the quantized prediction error signal, and generate second filter information, based on statistical properties of only the quantized prediction error signal among the prediction signal and the quantized prediction error signal; and an entropy coding unit configured to perform entropy coding on the quantized coefficients generated by the quantization unit and the first and second filter information generated by the filter information generation unit so as to generate a coded signal.

A video decoding apparatus according to an embodiment of the present invention generates a decoded signal by decoding a coded signal which represents a video. More specifically, the video decoding apparatus includes: an entropy decoding unit configured to perform entropy decoding on the coded signal to obtain quantized coefficients and first and second filter information; an inverse quantization unit configured to inversely quantize the quantized coefficients to generate a quantized prediction error signal; a prediction signal generation unit configured to generate a prediction signal predictive of the decoded signal, based on a decoded signal decoded prior to the decoding of the coded signal; and a filtering unit configured to filter the prediction signal based on the first filter information to generate a filtered prediction signal, to filter the quantized prediction error signal based on the second filter information to generate a filtered quantized prediction error signal, and generate the decoded signal by adding the filtered prediction signal and the filtered quantized prediction error signal.

A program according to an embodiment of the present invention causes a computer to code a signal to be coded which represents a video. More specifically, the program includes: generating a prediction signal predictive of the signal to be coded, based on a coded signal coded prior to the coding of the signal to be coded; quantizing a prediction error obtained by subtracting the prediction signal from the signal to be coded to generate quantized coefficients; inversely quantizing the quantized coefficients to generate a quantized prediction error signal; generating first filter information, based on statistical properties of only the prediction signal among the prediction signal and the quantized prediction error signal, and generating second filter information, based on statistical properties of only the quantized prediction error signal among the prediction signal and the quantized prediction error signal; and performing entropy coding on the quantized coefficients generated in the quantizing and the first and second filter information generated in the generating of filter information so as to generate a coded signal.

A program according to an embodiment of the present invention causes a computer to decode a coded signal which represents a video. More specifically, the program includes: performing entropy decoding on the coded signal to obtain quantized coefficients and first and second filter information; inversely quantizing the quantized coefficients to generate a quantized prediction error signal; generating a prediction signal predictive of the decoded signal, based on a decoded signal decoded prior to the decoding of the coded signal; and filtering the prediction signal based on the first filter information to generate a filtered prediction signal, filtering the quantized prediction error signal based on the second filter information to generate a filtered quantized prediction error signal, and generating the decoded signal by adding the filtered prediction signal and the filtered quantized prediction error signal.

An integrated circuit according to an embodiment of the present invention codes a signal to be coded which represents a video. More specifically, the integrated circuit includes: a prediction signal generation unit configured to generate a prediction signal predictive of the signal to be coded, based on a coded signal coded prior to the coding of the signal to be coded; a quantization unit configured to quantize a prediction error obtained by subtracting the prediction signal from the signal to be coded to generate quantized coefficients; an inverse quantization unit configured to inversely quantize the quantized coefficients to generate a quantized prediction error signal; a filter information generation unit configured to generate first filter information, based on statistical properties of only the prediction signal among the prediction signal and the quantized prediction error signal, and generate second filter information, based on statistical properties of only the quantized prediction error signal among the prediction signal and the quantized prediction error signal; and an entropy coding unit configured to perform entropy coding on the quantized coefficients generated by the quantization unit and the first and second filter information generated by the filter information generation unit so as to generate a coded signal.

An integrated circuit according to an embodiment of the present invention generates a decoded signal by decoding a coded signal which represents a video. More specifically, the integrated circuit includes: an entropy decoding unit configured to perform entropy decoding on the coded signal to obtain quantized coefficients and first and second filter information; an inverse quantization unit configured to inversely quantize the quantized coefficients to generate a quantized prediction error signal; a prediction signal generation unit configured to generate a prediction signal predictive of the decoded signal, based on a decoded signal decoded prior to the decoding of the coded signal; and a filtering unit configured to filter the prediction signal based on the first filter information to generate a filtered prediction signal, to filter the quantized prediction error signal based on the second filter information to generate a filtered quantized prediction error signal, and generate the decoded signal by adding the filtered prediction signal and the filtered quantized prediction error signal.

It is to be noted that the present invention can be implemented not only as video coding methods (apparatuses) and video decoding methods (apparatuses), but also as integrated circuits which implement these functions and as programs causing computers to execute these functions. Furthermore, these programs can be distributed through recording media such as CD-ROMs and recording media such as the Internet as a matter of course.

This is achieved by the features as set forth in the independent Claims.

Preferred Embodiments are the subject matter of dependent claims.

It is the particular approach of the present invention to replace a conventional adaptive filter operating on the reconstructed signal by two filters operating on the prediction signal and the quantized prediction error signal, respectively, which are individually adapted to the statistical properties of their respective input signals.

According to a first aspect of the present invention, a method of coding a video signal is provided. The method is based on differential pulse code modulation and includes the steps of computing a prediction signal and an error signal from the video signal to be coded, and is characterized by obtaining first filter information indicating a first filter adapted to statistical properties of the prediction signal, obtaining second filter information indicating a second filter adapted to statistical properties of the error signal, and coding the first filter information and the second filter information.

According to a further aspect of the present invention, a method of decoding a video signal is provided. The method is based on differential pulse code modulation and includes the steps of obtaining a prediction signal and an error signal, and computing a reconstructed signal from the prediction signal and the error signal, and is characterized by decoding first filter information and second filter information, setting a first filter and a second filter in accordance with the first filter information and the second filter information, respectively, and filtering the prediction signal and the error signal by the first filter and the second filter, respectively. Here, wherein the reconstructed signal is computed by adding the filtered prediction signal and the filtered error signal.

According to a further aspect of the present invention, an apparatus for coding a video signal is provided. The apparatus includes a differential pulse code modulation unit for computing a prediction signal and an error signal from the video signal to be coded and is characterized by a filter design unit for obtaining first filter information indicating a first filter adapted to statistical properties of the prediction signal and for obtaining second filter information indicating a second filter adapted to statistical properties of the error signal, and an encoder for coding the first filter information and the second filter information.

According to a further aspect of the present invention, an apparatus for decoding a video signal is provided. The apparatus is based on differential pulse code modulation and includes a reconstruction unit for obtaining a prediction signal and an error signal and for computing a reconstructed signal from the prediction signal and the error signal, and is characterized by a decoder for decoding first filter information and second filter information, a first filter set in accordance with the first filter information for filtering the prediction signal, and a second filter set in accordance with the second filter information for filtering the error signal. Here, the reconstruction unit is adapted to compute the reconstructed signal by adding the filtered prediction signal and the filtered error signal.

In a preferred Embodiment of the coding method or apparatus, the first filter information and the second filter information are obtained by minimizing a measure indicating a difference between the video signal to be coded and a reconstructed signal, the reconstructed signal being the sum of the prediction signal filtered by the first filter and the error signal filtered by the second filter.

In another preferred Embodiment of the coding method or apparatus, the first filter information is obtained by analyzing statistical properties of the prediction signal and the video signal to be coded, and the second filter information is obtained by analyzing statistical properties of the error signal and the video signal to be coded. In another preferred Embodiment of the coding method or apparatus, the present invention is applied to post filtering, wherein the inventive post filter is operating on the prediction signal, the error signal, and the decoded signal. To this end, the prediction signal and the error signal are added, a predetermined filter is applied to the result of the addition, third filter information indicating a third filter adapted to statistical properties of a signal resulting from the step of applying the predetermined filter is obtained, and the third filter information is also coded. Preferably, the predetermined filter is a deblocking filter.

In a corresponding preferred Embodiment of the decoding method or apparatus, the prediction signal and the error signal are added, a predetermined filter is applied to the results of the addition, third filter information is decoded, a third filter is set in accordance with the third filter information, and the third filter is applied to an output signal of the predetermined filter. Here, the reconstructed signal is computed by adding the filtered prediction signal, the filtered error signal, and an output signal of the third filter.

In another preferred Embodiment of the coding method or apparatus, the present invention is applied to post filtering, wherein the inventive post filter is operating on the prediction signal, the error signal, and the output signal of a conventional post filter. To this end, the prediction signal and the error signal are added, a predetermined filter is applied to the results of the adding step, post filter information based on statistical properties of a signal resulting from the step of applying the predetermined filter is obtained, a post filter is set in accordance with the post filter information, the post filter is applied to a signal resulting from the step of applying the predetermined filter, third filter information indicating a third filter adapted to statistical properties of a signal resulting from the step of applying the post filter is obtained, and the third filter information and the post filter information are also coded.

In a corresponding preferred Embodiment of the decoding method or apparatus, the prediction signal and the error signal are added, a predetermined filter is applied to the results of the addition, post filter information and third filter information are decoded, a post filter and a third filter are set in accordance with the post filter information and the third filter information, respectively, the post filter is applied to an output signal of the predetermined filter, and the third filter is applied to an output signal of the post filter. Here, the reconstructed signal is computed by adding the filtered prediction signal, the filtered error signal, and an output signal of the third filter.

In a preferred Embodiment of both the coding and decoding methods or apparatuses, the present invention is applied as a loop filter. To this end, the filtered prediction signal and the filtered error signal are added, and the result of the addition is delayed. Here, the prediction signal is obtained from the delayed results.

In another preferred Embodiment of both the coding and decoding methods or apparatuses, the present invention is applied to adaptive interpolation filtering for motion compensated prediction with sub-pel precision. To this end, the prediction signal is delayed, wherein the first filter is applied to the delayed prediction signal, the error signal is delayed, wherein the second filter is applied to the delayed error signal, and the filtered delayed prediction signal and the filtered delayed error signal are added, wherein the prediction signal is obtained from the result of the addition.

Preferably, the first filter information, the second filter information, and the third filter information include filter coefficients of the first filter, the second filter, and the third filter, respectively. In this manner, the computational load for the decoder can be reduced, because the decoder can easily set up the respective filters without any further computation.

Preferably, the first filter information and the second filter information include an indication of statistical properties of the prediction signal and the error signal, respectively. In this manner, the computational load for the encoder can be reduced, because the decoder is taking care of setting up the respective filters in accordance with the statistical properties determined by the encoder. Further, the decoder is provided with greater flexibility for adapting the filters to its particular needs.

Preferably, the first filter and the second filter are Wiener filters. Wiener filters are well-studied examples of linear optimum filters that can readily be determined from statistical properties of their input signal and the desired output signal.

[Advantageous Effects of Invention]

According to the present invention, prediction signals and quantized prediction error signals are analyzed in separate filtering processes. This makes it possible to reduce prediction errors and reconstruction errors, resulting in an increase in the coding efficiency.

[Brief Description of Drawings]

[DRAWINGS]

[FIG. 1]
FIG. 1 is a block diagram of a conventional video coding apparatus.
[FIG. 2]
FIG. 2 is a block diagram of a conventional video decoding apparatus.
[FIG. 3A]

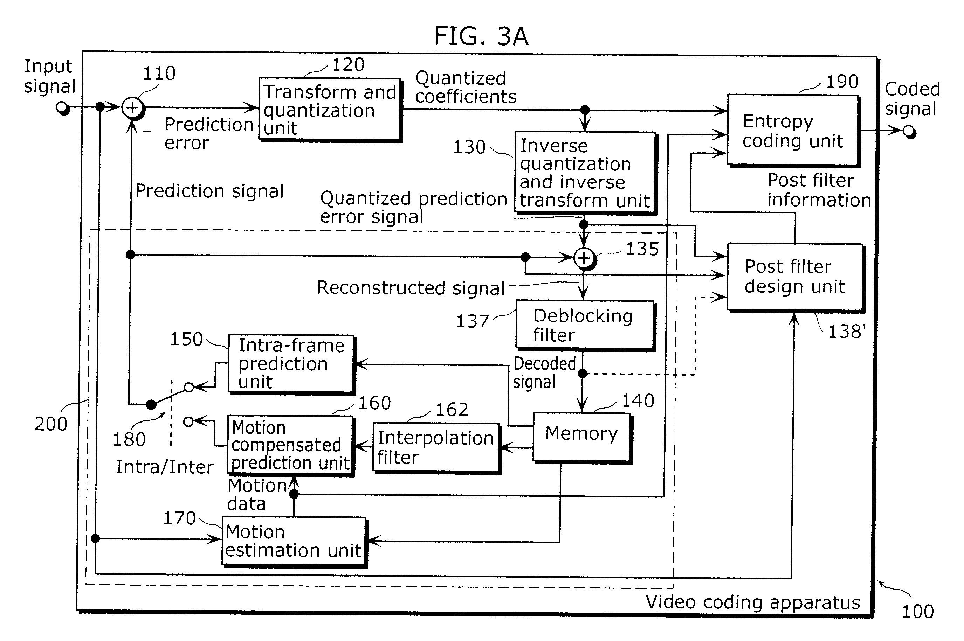

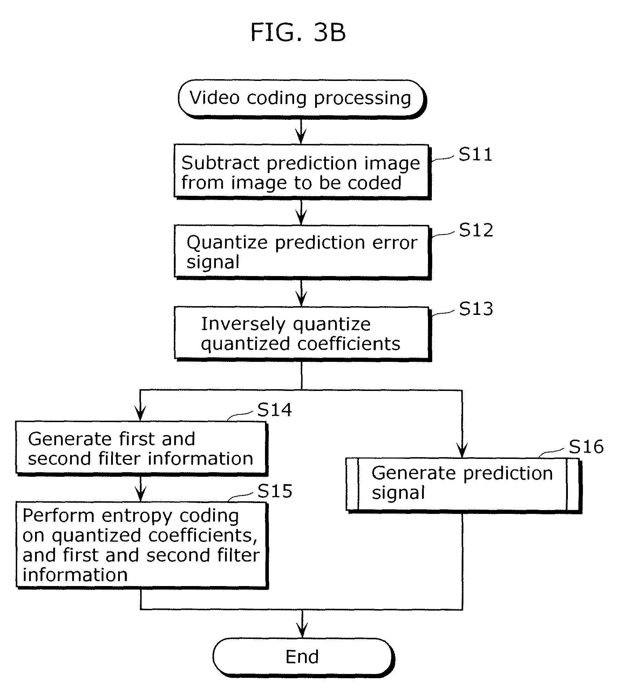

FIG. 3 is a block diagram of a video coding apparatus according to Embodiment 1 of the present invention.
[FIG. 3B]
FIG. 3 is a flow chart indicating operations of the video coding apparatus shown in FIG. 3A.
[FIG. 4A]

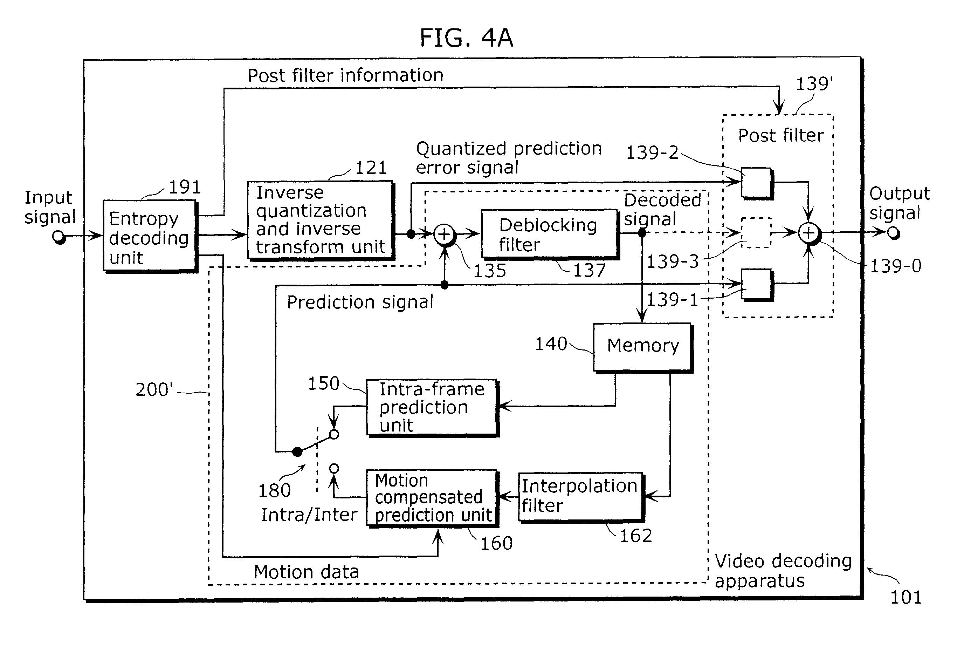

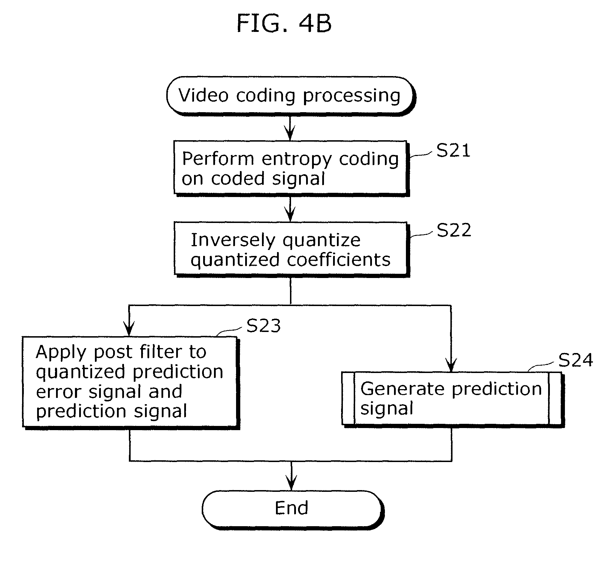

FIG. 4 is a block diagram of a video decoding apparatus according to Embodiment 1 of the present invention.
[FIG. 4B]
FIG. 4 is a flow chart indicating operations of the video decoding apparatus shown in FIG. 4A.
[FIG. 5]

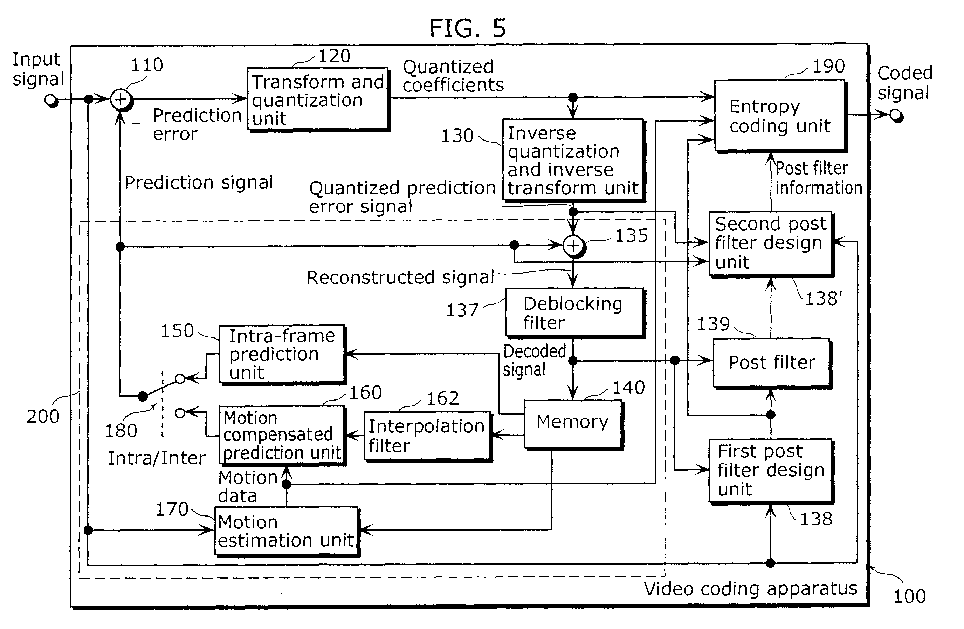

FIG. 5 is a block diagram of a video coding apparatus according to Embodiment 2 of the present invention.
[FIG. 6]

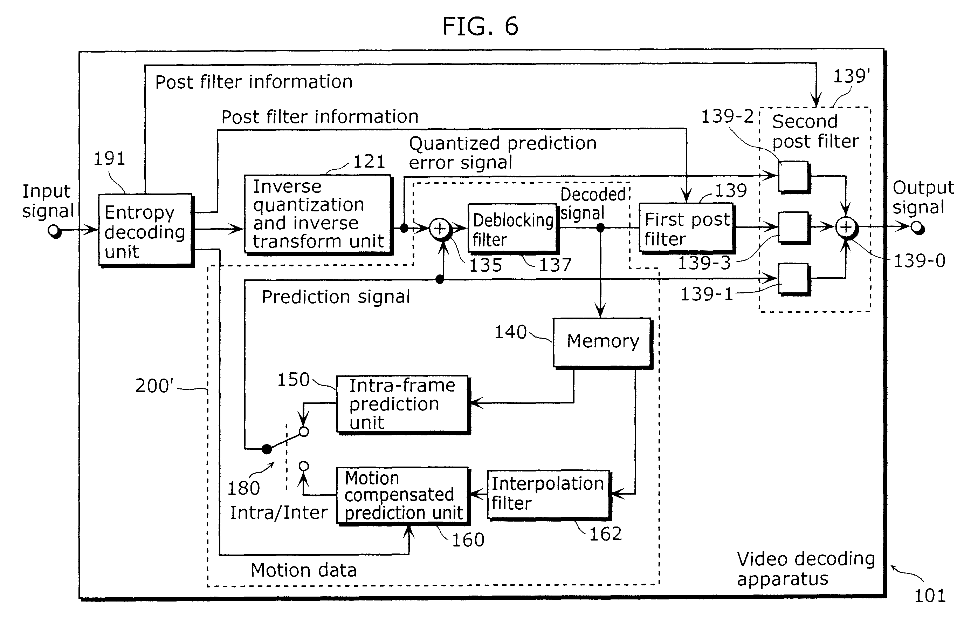

FIG. 6 is a block diagram of a video decoding apparatus according to Embodiment 2 of the present invention.
[FIG. 7]

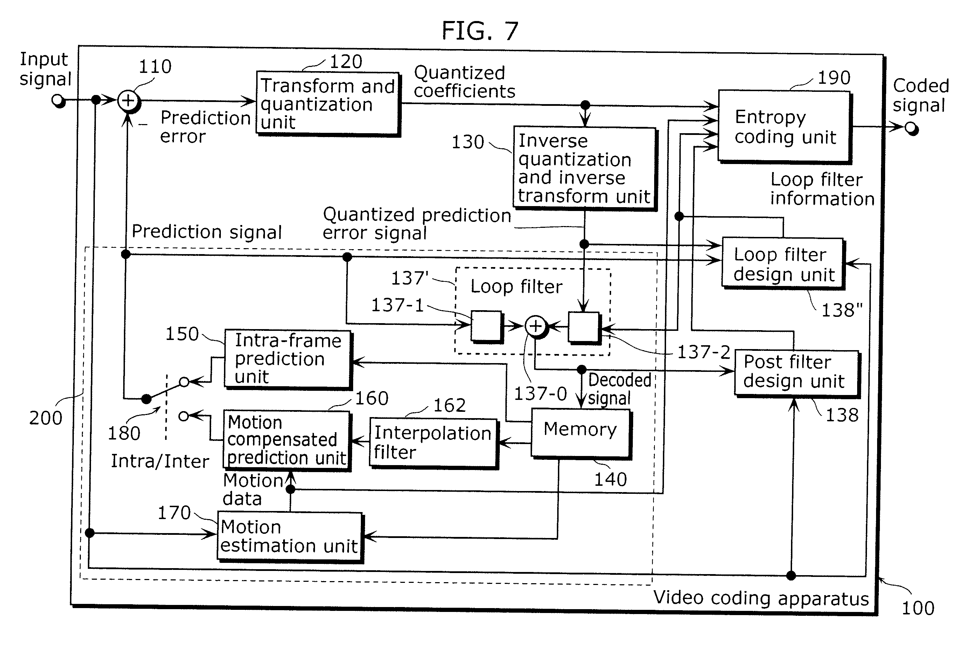

FIG. 7 is a block diagram of a video coding apparatus according to Embodiment 3 of the present invention.
[FIG. 8]

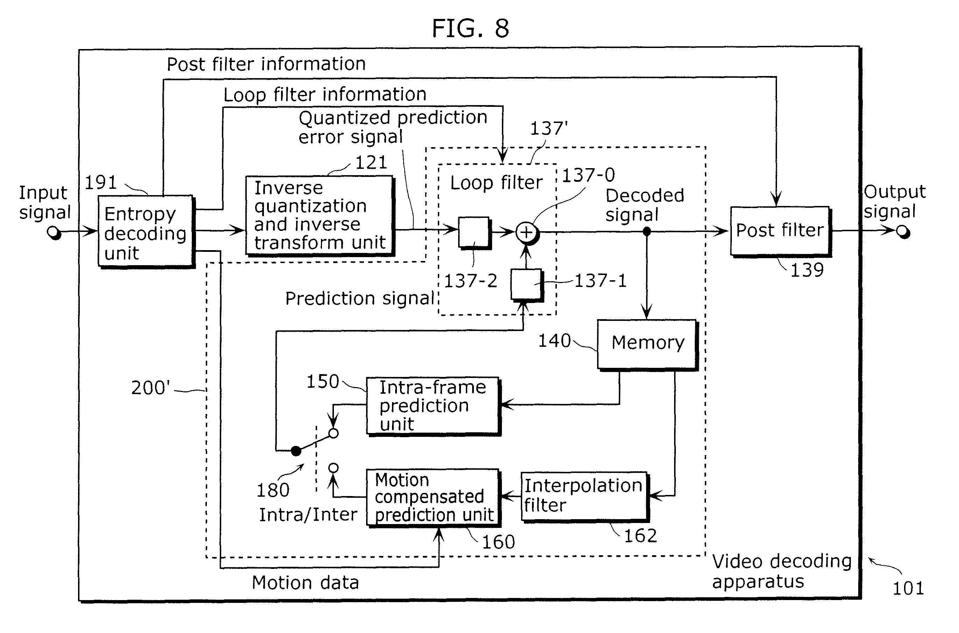

FIG. 8 is a block diagram of a video decoding apparatus according to Embodiment 3 of the present invention.
[FIG. 9]

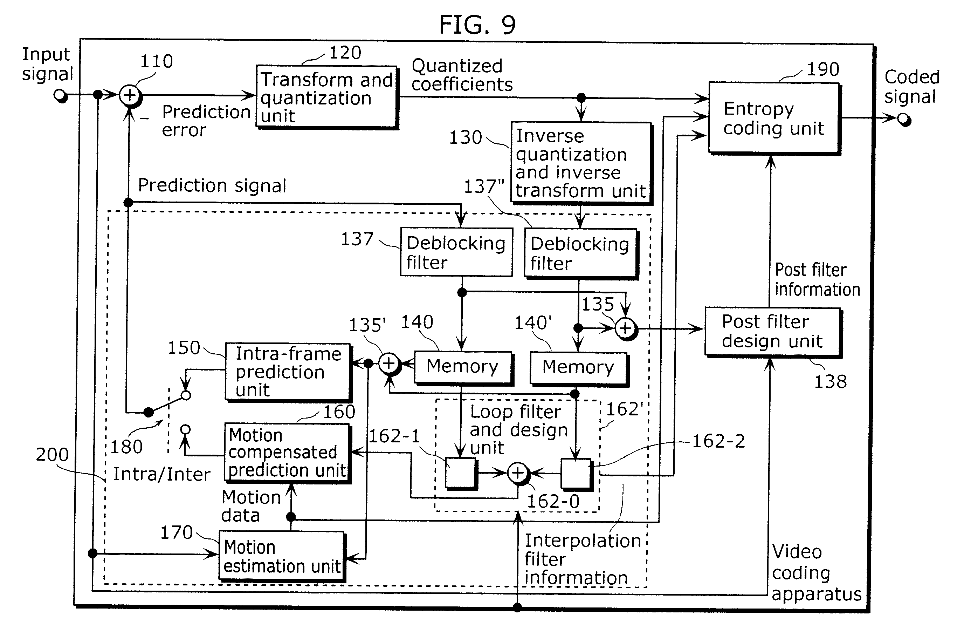

FIG. 9 is a block diagram of a video coding apparatus according to Embodiment 4 of the present invention.

[FIG. 10]

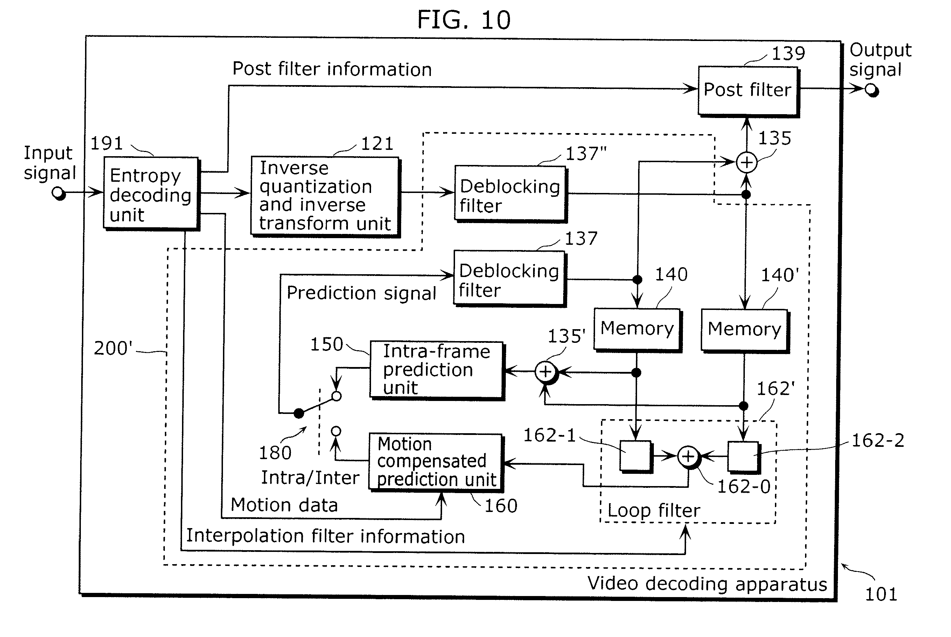

FIG. 10 is a block diagram of a video decoding apparatus according to Embodiment 4 of the present invention.
[FIG. 11A]

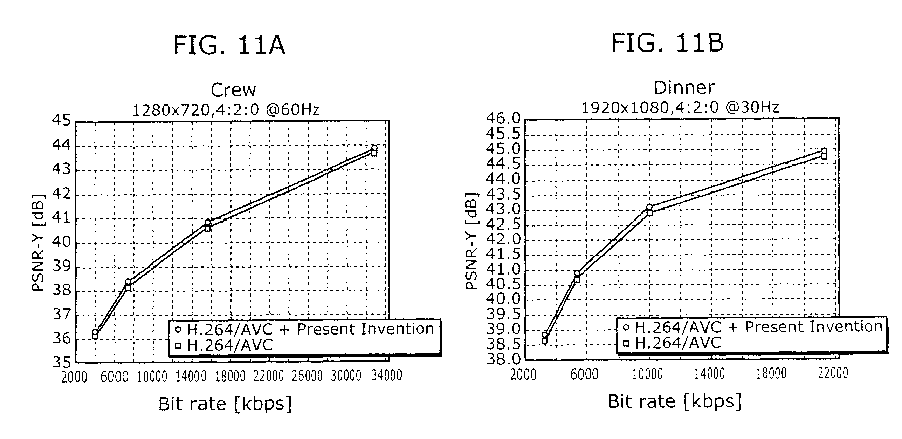

FIG. 11A is a diagram showing exemplary rate distortion curves for MPEG test sequences.
[FIG. 11B]
FIG. 11B is a diagram showing other exemplary rate distortion curves for MPEG test sequences.

[Description of Embodiments]

The H.264/AVC standard specifies two filter schemes (interpolation filter and deblocking filter) as well as the possibility to transmit post filter hints to a video decoding apparatus according to a specific post-filter scheme (post-filter hint SEI message). The following Embodiments of the present invention will show how each of the three schemes is improved by applying this invention.

(Embodiment 1)

FIG. 3A is a block diagram of a video coding apparatus 100 according to Embodiment 1 of the present invention. FIG. 3B is a flow chart indicating operations of the video coding apparatus 100 in FIG. 3A. The block diagram of FIG. 3A is similar to that of the conventional video coding apparatus shown in FIG. 1, wherein like components are denoted by like reference numerals. A repetition of the detailed description of these components will be omitted.
The video coding apparatus 100 shown in FIG. 3A includes a subtractor 110, a transform and quantization unit 120, an inverse quantization and inverse transform unit 130, a post filter design unit (filter information generation unit) 138', an entropy coding unit 190, and a prediction signal generation unit 200. This video coding apparatus 100 codes a signal to be coded which represents a video, and outputs the coded signal.
The subtractor 110 generates a prediction error signal by subtracting the prediction signal from the signal to be coded (S11). The transform and quantization unit 120 generates quantized coefficients by quantizing the prediction error (S12). The inverse quantization and inverse transform unit 130 inversely quantizes the quantized coefficients to generate a quantized prediction error signal (S13). The post filter design unit 138' generates first filter information based on the signal to be coded and the prediction signal, and generates the second filter information based on the signal to be coded and the quantized prediction error signal (S14). Subsequently, the post filter design unit 138' outputs post filter information including the first and second filter information. The entropy coding unit 190 performs entropy coding on the quantized coefficients, post filter information, and later-described motion data to generate a coded signal (S15). The prediction signal generation unit 200 generates a prediction signal for the signal to be coded, based on a signal coded prior to coding of the signal to be coded (input signal) (S16).
It is to be noted that the prediction signal generation unit 200 includes an adder 135, a deblocking filter 137, a memory 140, an intra-frame prediction unit 150, a motion compensated prediction unit 160, an interpolation filter 162, a motion estimation unit 170, and an intra/inter switch 180. This prediction signal generation unit 200 forms a loop starting with an operation by a subtractor 110. For this, the filters (such as the deblocking filter 137 and the interpolation filter 162) included in the prediction signal generation unit 200 are also referred to as loop filters.
The prediction signal generation process (S16) in FIG. 3B is described in detail. The adder 135 generates a reconstructed signal by adding the quantized prediction error signal and the prediction signal. The deblocking filter 137 generates a decoded signal by removing block distortion from the reconstructed signal. The memory 140 functions as a delay device for temporarily storing a decoded signal. The intra-frame prediction unit 150 generates a prediction signal by performing intra-frame prediction on the decoded signal. The interpolation filter 162 spatially interpolates the pixel values of the decoded signal prior to motion compensated prediction. The motion estimation unit 170 performs motion estimation based on the decoded signal and the next signal to be coded so as to generate motion data. The motion compensated prediction unit 160 performs motion compensated prediction based on the decoded signal and motion data to generate a prediction signal. The intra/inter switch 180 selects, as a prediction mode, either the "intra" mode or the "inter" mode. Consequently, the prediction signal outputted from the intra/inter switch 180 is the prediction signal for the next signal to be coded.
The video coding apparatus 100 according to Embodiment 1 of the present invention differs from the conventional video coding apparatus in the configuration of the post filter design unit 138'. In contrast to the conventional post filter design unit 138, the new post filter design unit 138' receives the prediction signal and the quantized prediction error signal in addition to the signal to be coded. In this manner, the new post filter design unit 138' may take different statistical properties of the prediction signal and the quantized prediction error signal into account when determining optimum filter information for filtering the prediction signal and the quantized prediction error signal.
Specifically, the new post filter design unit 138' may compute auto-correlation functions of the prediction signal and the quantized prediction error signal, the cross-correlation function between the prediction signal and the input signal, as well as the cross-correlation function between the quantized prediction error signal and the input signal, in order to determine an optimum filter information for each of the prediction signal and the quantized prediction error signal. In other words, the new post filter design unit 138' may apply a Wiener approach in order to determine filter information that minimizes a difference, that is, the mean squared error, between the signal to be coded and the output of the new post filter 139'. The result of this determination is fed as a post filter information to the entropy coding unit 190 in order to be inserted into the coded signal. It is to be noted that the post filter information may include a set of filter coefficients for each of the two filters, the coefficients of the auto-correlation matrices and the cross-correlation vectors, or any other information that allows the video decoding apparatus 101 to set up appropriate filters. In this context, it is also noted that the auto-correlation functions of the prediction signal and the quantized prediction error signal may also be computed on the video decoding apparatus 101 side so that only the cross-correlation functions between these signals and the input signal need to be transmitted.

As a specific example, the computation of filter coefficients of the new post filter 139' is detailed below.

The output of the new post filter 139' may be expressed as the following Expression 2.

[Math. 2]

$$s' = \sum_{i=1}^{M} w_i \cdot p_i + \sum_{i=1}^{N} w_{M+i} \cdot e_i \qquad \text{Expression 2}$$

wherein $W_1,..., W_M$ are M filter coefficients of the first filter 139-1 applied to M prediction samples $P_1,..., P_M$, and $W_{M+1},..., W_{M+N}$ are N filter coefficients of the second filter 139-2 applied to N samples $e_1,..., e_M$ of the quantized prediction signal.

Applying the Wiener-Hopf equation, the filter coefficients that minimize the mean squared error between the desired signal s and the filtered signal s' can be determined by the following Expression 3.

[Math. 3]

$$\begin{pmatrix} w_1 \\ M \\ w_M \\ w_{M+1} \\ M \\ w_{M+N} \end{pmatrix} = \begin{pmatrix} E[p_1 p_1] & \Lambda & E[p_1 p_M] & E[p_1 e_1] & \Lambda & E[p_1 e_N] \\ M & & & & & M \\ E[p_m p_1] & \Lambda & E[p_m p_M] & E[p_m e_1] & \Lambda & E[p_m e_N] \\ E[e_1 p_1] & \Lambda & E[e_1 p_M] & E[e_1 e_1] & \Lambda & E[e_1 e_N] \\ M & & & & & M \\ E[e_N p_1] & \Lambda & E[e_N p_M] & E[e_N e_1] & \Lambda & E[e_N e_N] \end{pmatrix}^{-1} \begin{pmatrix} E[p_1 s] \\ M \\ E[p_M s] \\ E[e_1 s] \\ M \\ E[e_N s] \end{pmatrix} \qquad \text{Expression 3}$$

wherein E[·] denotes the expected value. Hence, the filter coefficients $W_1,..., W_{M+N}$ are determined by the auto-correlation of the prediction signal, the auto-correlation of the quantized prediction error signal, the cross-correlation of the prediction signal and the quantized prediction error signal, the cross-correlation of the prediction signal and the desired signal, and the cross-correlation of the quantized prediction error signal and the desired signal. In the case where the prediction signal and the quantized prediction error signal are statistically independent, above Expression 3 is block-diagonal and the number of filter information items of the later-described first and second filters 139-1 and 139-2 are determined by the auto-correlation of the prediction signal (quantized prediction error signal) and the cross-correlation of the prediction signal (quantized prediction error signal) and the desired signal only.

According to Expression 3, it is possible to derive filter coefficients that minimize noise depending on two signals p and e having different statistical properties. In particular, it is also possible to reduce the amount of computation required to derive a filter assuming that there is no correlation (it is to be noted that this filter can exert performance higher than that of the conventional filter which does not separate p and e from each other). Otherwise, it is also possible to obtain the maximum noise reduction performance by deriving a filter coefficient directly from Expression 3, based on the correlation.

The present invention is not limited to the above method of computing the filter coefficients. Instead, a numerical optimization may be performed in order to determine filter coefficients that minimize a predetermined measure indicating a difference between the filtered signal and the desired signal. Such a measure may, for instance, include a weighted sum of absolute pixel differences. Here, the pixels located close to a block boundary are weighted stronger than the pixels at the block center in order to reduce blocking artifacts in the output.

In a preferred Embodiment, the new post filter design unit 138' may also receive the decoded signal, namely the output of the deblocking filter 137, as an input (See the dashed line in FIG. 3). In this manner, the new post filter design unit 138' may determine filter information for a later-described third filter 139-3 in accordance with statistical properties of the decoded signal and the input signal. This filter information is also conveyed to the video decoding apparatus 101 along with the filter information for the decoded signal and the quantized prediction error signal. The video decoding apparatus 101 may thus set up a third filter 139-3, which is directly operating on the decoded signal, as will be described in greater detail in connection with FIG. 4A.

In this preferred Embodiment, the output of the new post filter 139' may be expressed in analogy to Expression 2 as the following Expression 4.

[Math. 4]

$$s' = \sum_{i=1}^{M} w_i \cdot p_i + \sum_{i=1}^{N} w_{M+i} \cdot e_i + \sum_{i=1}^{L} w_{M+N+i} \cdot d_i \qquad \text{Expression 4}$$

wherein $W_{M+N+1},..., W_{M+N+L}$ are L filter coefficients of the third filter 139-3 applied to L samples $d_1,..., d_L$ of the decoded signal.

Similar as above, the filter coefficients that minimize the mean squared error between the desired signal s and the filtered signal s' can be determined by the following Expression 5.

[Math. 5]

$$\begin{pmatrix} w_1 \\ M \\ w_M \\ w_{M+1} \\ M \\ w_{M+N} \\ w_{M+N+1} \\ M \\ w_{M+N+L} \end{pmatrix} = \begin{pmatrix} \underline{E}[p_i p_j] & \underline{E}[p_i e_j] & \underline{E}[p_i d_j] \\ \underline{E}[e_i p_j] & \underline{E}[e_i e_j] & \underline{E}[e_i d_j] \\ \underline{E}[d_i p_j] & \underline{E}[d_i e_j] & \underline{E}[e_i e_j] \end{pmatrix}^{-1} \begin{pmatrix} E[p_1 s] \\ M \\ E[p_M s] \\ E[e_1 s] \\ M \\ E[e_N s] \\ E[d_1 s] \\ M \\ E[d_N s] \end{pmatrix} \qquad \text{Expression 5}$$

wherein E $[x_i y_i]$ denotes the sub-matrix consisting of all cross-correlation terms between x and y.

FIG. 4A is a block diagram of a video decoding apparatus 101 according to Embodiment 1 of the present invention. FIG. 4B is a flow chart indicating operations of the video decoding apparatus 101 in FIG. 4A. The block diagram of FIG. 4A is similar to that of the conventional video decoding apparatus shown in FIG. 2, wherein like components are denoted by like reference numerals. A repetition of the detailed description of these components will be omitted.

The video decoding apparatus 101 shown in FIG. 4A includes an entropy decoding unit 191, an inverse quantization and inverse transform unit 121, an adder 135, a deblocking filter 137, a memory 140, an intra-frame prediction unit 150, a motion compensated prediction unit 160, an interpolation filter 162, an intra/inter switch 180, and a post filter 139'.

This video decoding apparatus 101 decodes a coded signal coded by the video coding apparatus 100 shown in FIG. 3A to generate a decoded signal. It is to be noted that the functional blocks common with the video coding apparatus 100 shown in FIG. 3A are assigned with the same reference numerals, and detailed descriptions are omitted.

The entropy decoding unit 191 performs entropy decoding on the coded signal (input signal) outputted from the video coding apparatus 100 to obtain quantized coefficients, post filter information, and motion data (S21). The inverse quantization and inverse transform unit 121 inversely quantizes the quantized coefficients to generate a quantized prediction error signal (S22). The post filter 139' applies filtering on the respective prediction signal and quantized prediction error signal based on the post filter information (S23). More specifically, the post filter 139' includes a first filter 139-1 which filters the prediction signal based on the first filter information to generate a filtered prediction signal, a second filter 139-2 which filters the quantized prediction error signal based on the second filter information to generate a filtered quantized prediction error signal, and an adder 139-0 which adds the filtered prediction signal and the filtered quantized prediction error signal to generate a decoded signal. On the other hand, the prediction signal generation unit 200' generates a prediction signal for the next signal to be decoded, based on the decoded signal (S24).

The prediction signal generation unit 200' includes an adder 135, a deblocking filter 137, a memory 140, an intra-frame prediction unit 150, a motion compensated prediction unit 160, an interpolation filter 162, and an intra/inter switch 180. The different point from the prediction signal generation unit 200 shown in FIG. 3A is obtaining motion data from the entropy decoding unit 191 without using the motion estimation unit 170.

The video decoding apparatus 101 according to Embodiment 1 of the present invention differs from the conventional video decoding apparatus in the configuration of the post filter 139. The new post filter 139' includes at least two independent filters, one is a first filter 139-1 for filtering the prediction signal that is output from either the intra-frame prediction unit 150 or the motion compensated prediction unit 160, and the other is a second filter 139-2 for filtering the quantized prediction error signal that is output from the inverse quantization and transform unit 121. The output of these filters is combined by an adder 139-0, and provided as the final output signal of the video decoding apparatus 101.

In a manner similar to the conventional post filter 139, the new post filter 139' receives post filter information derived from the input signal by means of the entropy decoding unit 191. In contrast to the conventional video decoding apparatus, the post filter information is employed to set up at least two different filters, namely the first filter 139-1 for the prediction signal and the second filter 139-2 for the quantized prediction error signal.

As indicated by dashed lines in FIG. 4A, the new post filter 139' may also include a third filter 139-3 that is operating on the decoded signal output by the deblocking filter 137. In manners similar to those of the first filter 139-1 and the second filter 139-2, the third filter 139-3 is also set up in accordance with the filter information provided by the entropy decoding unit 191, that is, in accordance with the statistical properties of the decoded signal and the input signal determined on the video coding apparatus 100 side.

As described above in connection with the video coding apparatus 100 in FIG. 3A, the post filter information may include a set of filter coefficients for each of these filters, the coefficients of the relevant auto-correlation matrices and cross-correlation vectors, or any other information that allows the video decoding apparatus 101 to set up appropriate filters.

In accordance with Embodiment 1 of the present invention, post filtering of decoded video information is performed by means of at least two independently optimized filters operating on the prediction signal, the quantized prediction error signal, and - optionally - on the output of the deblocking filter. The outputs of the first filter 193-1 and the second filter 193-2 are added in order to form a final output signal of the video decoding apparatus 101. In addition, in the case of additionally setting the third filter 193-3, it is also good to average the result of adding the outputs of the first and second filters 193-1 and 193-2 and the output of the third filter 193-3. In this manner, each of these filters may be adapted to the statistical properties of the signal on which the filter operates. In this manner, the reconstruction error can be reduced more efficiently than with a single filter operating on the reconstructed signal only.


(Embodiment 2)

FIG. 5 is a block diagram of a video coding apparatus 100 according to Embodiment 2 of the present invention. The block diagram of FIG. 5 is similar to that of the conventional video coding apparatus shown in FIG. 3A, wherein like components are denoted by like reference numerals. A repetition of the detailed description of these components will be omitted.

The video coding apparatus 100 according to Embodiment 2 of the present invention differs from the conventional video coding apparatus in having the post filter 139 and the additional second post filter design unit 138'. In addition, the video coding apparatus 100 further differs from the video coding apparatus 100 shown in FIG. 3A in having the first post filter design unit 138 and the post filter 139. Further, the second post filter design unit 138' generates the third filter information based on the statistical properties of the output signal of the post filter 139, in addition to exerting the function of the post filter design unit 138' shown in FIG. 3A.

In a manner similar to the conventional video coding apparatus, the first post filter design unit 138 in FIG. 5 determines filter information optimum for the first post filter 139 that is to be applied to the decoded signal output by the deblocking filter 137 of the video decoding apparatus 101. Such a post filter 139 is also part of the video coding apparatus 100 according to Embodiment 2. The output of this post filter 139 is fed to the additional second post filter design unit 138', which also receives the prediction signal, the quantized prediction error signal, and the input signal. Based on the statistical properties of its input signals, the additional second post filter design unit 138' determines filter information for three independent filters operating on the prediction signal, the quantized prediction error signal, and the output signal of the post filter 139. The thus determined filter information is fed to the entropy coding unit 190 in order to be inserted into the coded signal.

Specifically, the additional second post filter design unit 138' may compute auto-correlation functions of the prediction signal, the quantized prediction error signal, and the output signal from the post filter 139, as well as the cross-correlation functions between these signals and the input signal, in order to determine optimum filter information for each of the prediction signal, the quantized prediction error signal, and the output signal from the post filter 139. A result of this determination is fed as additional post filter information to the entropy coding unit 190 in order to be inserted into the coded signal. The post filter information may include a set of filter coefficients for each of the three filters, the coefficients of the auto-correlation matrices and the cross-correlation vectors, or any other information that allows the video decoding apparatus 101 to set up appropriate filters. In this context, it is also noted that the auto-correlation functions of the prediction signal, the quantized prediction error signal, and the output signal from the post filter 139 may also be computed on the video decoding apparatus 101 side so that only the cross-correlation functions between these signals and the input signal need to be transmitted.

FIG. 6 is a block diagram of a video decoding apparatus 101 according to Embodiment 2 of the present invention. The block diagram of FIG. 6 is similar to that of the video decoding apparatus 101 shown in FIG. 4A, wherein like components are denoted by like reference numerals. A repetition of the detailed description of these components will be omitted.

The video decoding apparatus 101 according to Embodiment 2 of the present invention differs from the conventional video decoding apparatus in having the additional second post filter 139', which receives the prediction signal, the quantized prediction error signal and the output signal from the first post filter 139. In addition, the video decoding apparatus 101 further differs from the video decoding apparatus 101 shown in FIG. 4A in having the first post filter 139.

The additional second post filter 139' includes three independent filters, one is a first filter 139-1 for filtering the prediction signal that is output from the intra-frame prediction unit 150 or the motion compensated prediction unit 160, another is a second filter 139-2 for filtering the quantized prediction error signal that is output from the inverse quantization and transform unit 121, and the other is a third filter 139-3 for filtering the post-filtered signal that is output from the first post filter 139. Subsequently, the result of adding the outputs of the first and second filters 139-1 and 139-2 and the output of the third filter 139-3 are averaged, and are provided as a final output signal of the decoding apparatus 101.

As explained above in connection with the video coding apparatus 100 in FIG. 5, the post filter information may include a set of filter coefficients for each of these filters, the coefficients of the relevant auto-correlation matrices and cross-correlation vectors, or any other information that allows the video decoding apparatus to set up appropriate filters.

In accordance with Embodiment 2 of the present invention, post filtering of decoded video information is performed by means of three independently or jointly optimized filters operating on the prediction signal, the quantized prediction error signal, and the output of the (conventional) post filter. The output of the separate filters is added in order to form the final output signal of the video decoding apparatus 101. Each of these filters may be adapted to the statistical properties of the signal on which the filter operates. In this manner, the reconstruction error can be reduced more efficiently than with a single filter operating on the reconstructed signal only. Moreover, the coded signal generated by the video coding apparatus 100 of this Embodiment is compatible to conventional video decoding apparatuses which may simply ignore the additional post filter information. The video decoding apparatuses 101 that are aware of the additional post filtering, however, may employ this information for setting up the additional post filter in order to further enhance picture quality.

(Embodiment 3)

FIG. 7 is a block diagram of a video coding apparatus 100 according to Embodiment 3 of the present invention. The block diagram of FIG. 7 is similar to that of the video coding apparatus 100 shown in FIG. 3A, wherein like components are denoted by like reference numerals. A repetition of the detailed description of these components will be omitted.

The video coding apparatus 100 according to Embodiment 3 of the present invention differs from the conventional video coding apparatus and the video coding apparatus 100 shown in FIG. 3A in that the adder 135 and the deblocking filter 137 are replaced by a new loop filter 137' and a corresponding new loop filter design unit 138'. However, although the post filter design unit 138' shown in FIG. 3A and the post filter design unit 138" are different from each other in terms of whether the resulting filter information is used by the post filter 139" or the loop filter 137', the filter information generation process itself is the same for both.

The new loop filter design unit 138' receives the input signal, the prediction signal, and the quantized prediction error signal as an input. In a manner similar to the new post filter design unit 138' of Embodiment 1, the new loop filter design unit 138" analyzes the statistical properties of its input signals and feeds new loop filter information to the new loop filter 137' and the entropy coding unit 190.

The new loop filter 137' includes a first filter 137-1 operating on the prediction signal, a second filter 137-2 operating on the quantized prediction error signal, and an adder 137-0 for adding the filtered signals. The first and the second filters 137-1 and 137-2 are set up in accordance with the new loop filter information received from the new loop filter design unit 138" as described above in conjunction with the above-described Embodiments.

Specifically, the first filter 137-1 and the second filter 137-2 may be optimized so as to minimize a difference measure, such as the mean squared error, between the signal to be coded and the reconstructed signal, that is, the output of the new loop filter 137'.

Depending on how the filters 137-1 and 137-2 are set up, the new loop filter 137' is operating as a proper loop filter (both filters are operating on all pixels of a given block) or as a deblocking filter (both filters are predominantly operating on pixels close to a block boundary). Especially in the former case, the video coding apparatus 100 may additionally be equipped with a conventional deblocking filter (not shown) which receives input from the new loop filter 137' and feeds its output to the memory unit 140 and the post filter design unit 138.

FIG. 8 is a block diagram of a video decoding apparatus 101 according to Embodiment 3 of the present invention. The block diagram of FIG. 8 is similar to that of the video decoding apparatus 101 shown in FIG. 4A, wherein like components are denoted by like reference numerals. A repetition of the detailed description of these components will be omitted.

The video decoding apparatus 101 according to Embodiment 3 of the present invention differs from the conventional video decoding apparatus and the video decoding apparatus 101 shown in FIG. 4A in having the new loop filter 137' which replaces the adder 135 and the conventional deblocking filter 137.

The configuration of the new loop filter 137', however, is identical to the configuration of the corresponding video coding apparatus 100 shown in FIG. 7. Specifically, the new loop filter 137' includes a first filter 137-1 operating on the prediction signal, a second filter 137-2 operating on the quantized prediction error signal, and an adder 137-0 for adding the filtered signals. The first and the second filters 137-1 and 137-2 are set up in accordance with the new loop filter information received from the entropy decoding unit 191 as explained in conjunction with the above-described Embodiments. As a description already given of the video coding apparatus 100 according to Embodiment 3, the new loop filter 137' of the video decoding apparatus 101 may be provided downstream of the conventional deblocking filter (not shown).

In accordance with Embodiment 3 of the present invention, an adaptive loop filter 137' is provided which includes two jointly or independently optimized filters operating on the prediction signal and the quantized prediction error signal, respectively. In this manner, the loop filter 137' may take different statistical properties of these signals into account. Therefore, the reconstruction error can be reduced more efficiently than with a single filter operating on the reconstructed signal only. Moreover, due to the reduction of the reconstruction error, coding efficiency is increased.

(Embodiment 4)

FIG. 9 is a block diagram of a video coding apparatus 100 according to Embodiment 4 of the present invention. The block diagram of FIG. 9 is similar to that of the video coding apparatus 100 shown in FIG. 3A, wherein like components are denoted by like reference numerals. A repetition of the detailed description of these components will be omitted.

In Embodiment 4, the present invention is applied to adaptive interpolation filtering for motion compensated prediction. The video coding apparatus 100 according to this Embodiment differs from the conventional video coding apparatus and the video coding apparatus 100 shown in FIG. 3A in that the interpolation filter 162 is replaced by a new interpolation filter and design unit 162' and that there are two memory units 140 and 140' in order to store the prediction signal and the quantized prediction error signal separately, as well as two deblocking filters 137 and 137' in order to perform deblocking of the prediction signal and the quantized prediction error signal independently of each other.

In addition, it is noted that since the dynamic range of the quantized prediction error is usually larger than the dynamic range of the prediction signal, the memory 140' for storing the quantized prediction error may be of higher bit depth than the memory 140 for storing the prediction signal. In certain situations, it may be beneficial to decrease the dynamic range of the quantized prediction error signal in order to get a lower bit depth. This may be done by an additional quantization of the quantized prediction error signal.

The new interpolation filter and design unit 162' of FIG. 9 includes a first filter 162-1 operating on the prediction signal delayed by the memory unit 140, a second filter 162-2 operating on the quantized prediction error signal delayed by the memory unit 140', and an adder 162-0 for adding the two filtered signals. As described above, the first and the second filter are optimized so as to minimize a distance measure between the output of the adder 162-0 and the desired signal. In the case of motion compensated prediction, the desired signal is the input signal at a different point of time. A result of this optimization process is fed as new interpolation filter information to the entropy coding unit 190 in order to be inserted into the output signal.

FIG. 10 is a block diagram of a video decoding apparatus 101 according to Embodiment 4 of the present invention. The block diagram of FIG. 10 is similar to that of the video decoding apparatus 101 shown in FIG. 4A, wherein like components are denoted by like reference numerals. A repetition of the detailed description of these components will be omitted.

The video decoding apparatus 101 according to Embodiment 4 of the present invention differs from the conventional video decoding apparatus in that the interpolation filter 162 is replaced by a new interpolation filter 162" and that there are two memory units 140 and 140' in order to store the prediction signal and the quantized prediction error signal separately, as well as two deblocking filters 137 and 137" in order to perform deblocking of the prediction signal and the quantized prediction error signal independently of each other.

Similar to the configuration of the corresponding video coding apparatus 100 shown in FIG. 9, the video decoding apparatus 101 is provided with a new loop filter 162", which includes a first filter 162-1 operating on the prediction signal, a second filter 162-2 operating on the quantized prediction error signal, and an adder 162-0 for adding the filtered signals. The first and the second filters 162-1 and 162-2 are set up in accordance with the new interpolation filter information received from the entropy decoding unit 191 as described above in conjunction with the previous Embodiments.

In accordance with Embodiment 4 of the present invention, an adaptive interpolation filter for motion compensated prediction at sub-pel precision is provided. The inventive loop filter 162" includes two jointly or independently optimized filters operating on the (delayed) prediction signal and the (delayed) quantized prediction error signal, respectively. In this manner, the loop filter 162" may take different statistical properties of these signals into account. Therefore, the prediction error can be reduced more efficiently than with a conventional adaptive interpolation filter 162 operating on the (delayed) decoded signal only. Hence, coding efficiency can be increased accordingly.

FIG. 11A and 11B show rate distortion curves for two different MPEG test sequences, illustrating the advantageous effect of the present invention. The rate distortion curves are based on Embodiment 1. having an additional post filter with $M = N = L = 1$. In the diagrams of FIG. 11A and 11B, the Y-PSNR of the luminance component is plotted versus the required bit rate for two different MPEG test sequences. The invented scheme is compared to H.264/AVC using a non-separable two-dimensional Wiener post filter with 5x5 coefficients. Intra-frame coding is applied for comparison. An increase of the Y-PSNR of up to 0.3 dB can be observed with this invention.

In the above Embodiments of the present invention, the inventive video filter includes filters operating on the prediction signal and the quantized prediction error signal, respectively. However, each pair of signal selected out of the set of the prediction signal, the error signal, and the reconstructed signal (the sum of the prediction signal and the error signal) is linearly independent. Therefore, the present invention may also be applied to a combination of the reconstructed signal and the quantized prediction error signal or a combination of the reconstructed signal and the prediction signal.

Further, the present invention is not restricted to based on whether a filter is fixed or adaptive. Any filter of the invented filter scheme may contain either fixed or adaptive filters. In the case of adaptive filters, filter information such as coefficients is coded and sent to the video decoding apparatus as side information. In the context of the H.264/AVC coding scheme, the filter information such as coefficients is transmitted in the slice header, in the picture parameter set, or in the sequence parameter set. To perform the adaptive post filter schemes, the post filter information can also be sent as an SEI (Supplemental Enhancement Information) to the video decoding apparatus.

It is also to be noted that the present invention can be applied to any conventional coding scheme based on differential pulse code modulation, including coding schemes for video and non-video that is audio data. Moreover, the present invention may also be applied to the spatial scalable video coding scheme of H.264/AVC, in which reconstructed images of a low spatial resolution, consisting of a prediction signal and a quantized prediction error signal, are upsampled and interpolated with one filter resulting in images of a high spatial resolution. In the context of spatial scalable video coding, the prediction signal and the quantized prediction error signal could be considered separately, for example, by different filter coefficients for each signal. It is also possible to apply the present invention in the context of high frequency modeling. In this context, the present invention offers to use the statistics of the prediction signal and of the quantized prediction error signal individually for the filtering and for the adjustment of the higher order statistics.

Further, the present invention is not restricted to Wiener filters, but may also be applied to other adaptive filters such as non-linear adaptive filters based on a Volterra series expansion, filters that optimize a measure other than the mean squared error between the corrupted signal and the desired signal, and so on.

Finally, the various Embodiments of the present invention may be combined, such that, for instance, two independently optimized filters are employed for post filtering in accordance with Embodiment 1 while other two independently optimized filters are employed as a loop filter in accordance with Embodiment 3. Similar combinations of the other Embodiments are also feasible.

Summarizing, the present invention relates to optimum filters in the context of video coding based on differential pulse code modulation. It is the particular approach of the present invention to provide two filters that operate independently of each other on the prediction signal and the quantized prediction error signal, rather than a single filter operating on the reconstructed signal that is the sum of the prediction signal and the error signal. In this manner, different statistical properties of the prediction signal and the error signal can be taken into account, resulting in increased coding efficiency due to lower prediction errors and/or reconstruction errors.

(Other Variations)

The present invention has been described based on the above Embodiments 1 to 4, but it is to be noted that the present invention is not limited to these Embodiments 1 to 4 as a matter of course. The following are also included in the scope of the present invention.

Specifically, each of the above-described apparatuses is a computer system including a micro processor, a ROM, a RAM, a hard disk unit, a display unit, a keyboard, and a mouse. A computer program is stored in the RAM or a hard disk unit. Each of the apparatuses exerts its function by operating according to the computer program. Here, the computer program is configured with combined instruction codes indicating instructions to the computer in order to achieve predetermined functions.

Some or all of the structural elements which make up each of the apparatuses may be configured in form of a single system LSI (Large Scale Integration). A system LSI is a super multi-functional LSI manufactured by integrating plural structural element units on a single chip, and specifically is a computer system configured to include a macro processor, a ROM, a RAM, and the like. The RAM stores a computer program. The system LSI achieves its functions by operating according to the computer program.

Some or all of the structural elements which make up each of the apparatuses may be configured in form of an IC card or a module which is attachable/detachable to/from each of the apparatuses. The IC card or module is a computer system configured to include a microprocessor, a ROM, and a RAM. The IC card or module may include the super multi-functional LSI. The IC card or module achieves its functions by operating according to the computer program. This IC card or module may be tamper-resistant.

The present invention may be implemented as the methods. In addition, each of these methods may be a compute program causing a computer to execute the method, and may be a digital signal representing the computer program.

In addition, the present invention may be implemented as computer programs or digital signals recorded on computer-readable recording media such as flexible discs, hard disks, CD-ROMs, MOs, DVDs, DVD-ROMs, DVD-RAMs, BDs (Blu-ray Discs), and semiconductor memories. In addition, the present invention may be the digital signals recorded on these recording media.

In addition, the present invention may be intended to transmit the computer programs and digital signals via electrical communication lines, wireless or wired communication lines, networks represented by the Internet, data broadcasting or the like.

In addition, the present invention may be implemented as a computer system including a memory which stores the computer program and a micro processor which operates according to the computer program.

In addition, the program or digital signal may be recorded on the recording media and then transferred, or may be transferred via the network or the like, and then executed by another independent computer system.

It is also good to combine the above-described Embodiments and Variations.

The Embodiments of the present invention have been described with reference to the drawings, but the present invention is not limited to the illustrated Embodiments. It should be appreciated that various modifications and variations are possible in the illustrated Embodiments within the same or equivalent scope of the present invention.

[Industrial Applicability]

The present invention is advantageously applicable to video coding methods (apparatuses) and video decoding methods (apparatuses).

[Reference Signs List]

    100 Video coding apparatus
    101 Video decoding apparatus
    110 Subtractor
    120 Transform and quantization unit
    121, 130 Inverse quantization and inverse transform unit
    135, 135', 137-0, 139-0, 162-0 Adder
    137,137' Deblocking filter
    137', 162" Loop filter
    137-1, 137-2, 139-1, 139-2, 139-3, 162-1, 162-2 Filter
    138, 138' Post filter design unit

138" Loop filter design unit
139, 139' Post filter
140, 140' Memory
150 Intra-frame prediction unit
160 Motion compensated prediction unit
162 Interpolation filter
162' Loop filter and design unit
170 Motion estimation unit
180 Intra/Inter switch
190 Entropy coding unit
191 Entropy decoding unit
200, 200' Prediction signal generation unit

**Claims**

1. A video coding method of coding a signal to be coded which represents a video, said video coding method comprising:

   generating a prediction signal predictive of the signal to be coded, based on a coded signal coded prior to the coding of the signal to be coded;
   quantizing a prediction error obtained by subtracting the prediction signal from the signal to be coded to generate quantized coefficients;
   inversely quantizing the quantized coefficients to generate a quantized prediction error signal;
   generating first filter information, based on statistical properties of only the prediction signal among the prediction signal and the quantized prediction error signal, and generating second filter information, based on statistical properties of only the quantized prediction error signal among the prediction signal and the quantized prediction error signal; and
   performing entropy coding on the quantized coefficients generated in said quantizing and the first and second filter information generated in said generating of filter information so as to generate a coded signal.

2. The video coding method according to Claim 1,
   wherein, in said generating of filter information, the first and second filter information are generated so as to minimize a difference between (I) the signal to be coded, and (II) a reconstructed signal obtained by adding (II-i) a filtered prediction signal obtained by filtering the prediction signal based on the first filter information, and (II-ii) a filtered quantized prediction error signal obtained by filtering the quantized prediction error signal based on the second filter information.

3. The video coding method according to Claim 1,
   wherein, said generating of a prediction signal includes:

   filtering the prediction signal based on the first filter information to generate a filtered prediction signal, filtering the quantized prediction error signal based on the second filter information to generate a filtered quantized prediction error signal, and generating a reconstructed signal by adding the filtered prediction signal and the filtered quantized prediction error signal; and
   generating a second prediction signal predictive of a signal to be coded subsequent to the coding of the signal to be coded, based on the reconstructed signal.

4. The video coding method according to Claim 3,
   wherein, in said filtering, deblocking of the reconstructed signal is performed so as to reduce block distortion.

5. The video coding method according to Claim 3,
   wherein, in said filtering, interpolation filtering is performed prior to motion compensated prediction.

6. The video coding method according to Claim 1, wherein:

   in said generating of filter information, third filter information is generated based on statistical properties of a reconstructed signal obtained by adding the prediction signal and the quantized prediction error signal; and
   in said performing of entropy coding, entropy coding is performed on the quantized prediction error signal, and the first, second, and third filter information so as to generate the coded signal.

7. A video decoding method of generating a decoded signal by decoding a coded signal which represents a video, said video decoding method comprising:

performing entropy decoding on the coded signal to obtain quantized coefficients and first and second filter information;

inversely quantizing the quantized coefficients to generate a quantized prediction error signal;

generating a prediction signal predictive of the decoded signal, based on a decoded signal decoded prior to the decoding of the coded signal; and

filtering the prediction signal based on the first filter information to generate a filtered prediction signal, filtering the quantized prediction error signal based on the second filter information to generate a filtered quantized prediction error signal, and generating the decoded signal by adding the filtered prediction signal and the filtered quantized prediction error signal.

8. The video decoding method according to Claim 7, wherein, in said generating of a prediction signal includes:

filtering the prediction signal based on the first filter information to generate a filtered prediction signal, filtering the quantized prediction error signal based on the second filter information to generate a filtered quantized prediction error signal, and generating a reconstructed signal by adding the filtered prediction signal and the filtered quantized prediction error signal; and

generating a second prediction signal predictive of a signal to be decoded subsequent to the decoding of the coded signal, based on the reconstructed signal.

9. A video coding apparatus which codes a signal to be coded which represents a video, said video coding apparatus comprising:

a prediction signal generation unit configured to generate a prediction signal predictive of the signal to be coded, based on a coded signal coded prior to the coding of the signal to be coded;

a quantization unit configured to quantize a prediction error obtained by subtracting the prediction signal from the signal to be coded to generate quantized coefficients;

an inverse quantization unit configured to inversely quantize the quantized coefficients to generate a quantized prediction error signal;

a filter information generation unit configured to generate first filter information, based on statistical properties of only the prediction signal among the prediction signal and the quantized prediction error signal, and generate second filter information, based on statistical properties of only the quantized prediction error signal among the prediction signal and the quantized prediction error signal; and

an entropy coding unit configured to perform entropy coding on the quantized coefficients generated by said quantization unit and the first and second filter information generated by said filter information generation unit so as to generate a coded signal.

10. A video decoding apparatus which generates a decoded signal by decoding a coded signal which represents a video, said video decoding apparatus comprising:

an entropy decoding unit configured to perform entropy decoding on the coded signal to obtain quantized coefficients and first and second filter information;

an inverse quantization unit configured to inversely quantize the quantized coefficients to generate a quantized prediction error signal;

a prediction signal generation unit configured to generate a prediction signal predictive of the decoded signal, based on a decoded signal decoded prior to the decoding of the coded signal; and

a filtering unit configured to filter the prediction signal based on the first filter information to generate a filtered prediction signal, to filter the quantized prediction error signal based on the second filter information to generate a filtered quantized prediction error signal, and generate the decoded signal by adding the filtered prediction signal and the filtered quantized prediction error signal.

11. A program causing a computer to code a signal to be coded which represents a video, said program comprising:

generating a prediction signal predictive of the signal to be coded, based on a coded signal coded prior to the coding of the signal to be coded;

quantizing a prediction error obtained by subtracting the prediction signal from the signal to be coded to generate quantized coefficients;

inversely quantizing the quantized coefficients to generate a quantized prediction error signal;

generating first filter information, based on statistical properties of only the prediction signal among the prediction signal and the quantized prediction error signal, and generating second filter information, based on statistical properties of only the quantized prediction error signal among the prediction signal and the quantized prediction error signal; and

performing entropy coding on the quantized coefficients generated in said quantizing and the first and second filter information generated in said generating of filter information so as to generate a coded signal.

12. A program causing a computer to decode a coded signal which represents a video, said program comprising:

performing entropy decoding on the coded signal to obtain quantized coefficients and first and second filter information;

inversely quantizing the quantized coefficients to generate a quantized prediction error signal;

generating a prediction signal predictive of the decoded signal, based on a decoded signal decoded prior to the decoding of the coded signal; and

filtering the prediction signal based on the first filter information to generate a filtered prediction signal, filtering the quantized prediction error signal based on the second filter information to generate a filtered quantized prediction error signal, and generating the decoded signal by adding the filtered prediction signal and the filtered quantized prediction error signal.

13. An integrated circuit which codes a signal to be coded which represents a video, said integrated circuit comprising:

a prediction signal generation unit configured to generate a prediction signal predictive of the signal to be coded, based on a coded signal coded prior to the coding of the signal to be coded;

a quantization unit configured to quantize a prediction error obtained by subtracting the prediction signal from the signal to be coded to generate quantized coefficients;

an inverse quantization unit configured to inversely quantize the quantized coefficients to generate a quantized prediction error signal;

a filter information generation unit configured to generate first filter information, based on statistical properties of only the prediction signal among the prediction signal and the quantized prediction error signal, and generate second filter information, based on statistical properties of only the quantized prediction error signal among the prediction signal and the quantized prediction error signal; and

an entropy coding unit configured to perform entropy coding on the quantized coefficients generated by said quantization unit and the first and second filter information generated by said filter information generation unit so as to generate a coded signal.

14. An integrated circuit which generates a decoded signal by decoding a coded signal which represents a video, said integrated circuit comprising:

an entropy decoding unit configured to perform entropy decoding on the coded signal to obtain quantized coefficients and first and second filter information;

an inverse quantization unit configured to inversely quantize the quantized coefficients to generate a quantized prediction error signal;

a prediction signal generation unit configured to generate a prediction signal predictive of the decoded signal, based on a decoded signal decoded prior to the decoding of the coded signal; and

a filtering unit configured to filter the prediction signal based on the first filter information to generate a filtered prediction signal, to filter the quantized prediction error signal based on the second filter information to generate a filtered quantized prediction error signal, and generate the decoded signal by adding the filtered prediction signal and the filtered quantized prediction error signal.

## FIG. 1

Video coding apparatus

Input signal → 110 (+) → Prediction error → 120 Transform and quantization unit → Quantized coefficients → 190 Entropy coding unit → Coded signal

Prediction signal

130 Inverse quantization and inverse transform unit

Quantized prediction error signal → 135 (+)

Reconstructed signal → 137 Deblocking filter

Post filter information

Decoded signal

150 Intra-frame prediction unit

180 Intra/Inter

160 Motion compensated prediction unit

162 Interpolation filter

140 Memory

138 Post filter design unit

Motion data

170 Motion estimation unit

EP 2 323 407 A1

20

## FIG. 2

EP 2 323 407 A1

## FIG. 3A

Video coding apparatus 100

EP 2 323 407 A1

# FIG. 3B

```
┌─────────────────────────────┐
│  Video coding processing    │
└─────────────────────────────┘
              │
              ▼
┌─────────────────────────────┐  S11
│ Subtract prediction image   │
│ from image to be coded      │
└─────────────────────────────┘
              │
              ▼
┌─────────────────────────────┐  S12
│ Quantize prediction error   │
│ signal                      │
└─────────────────────────────┘
              │
              ▼
┌─────────────────────────────┐  S13
│ Inversely quantize          │
│ quantized coefficients      │
└─────────────────────────────┘
              │
       ┌──────┴──────────────────────┐
       ▼                              ▼
┌──────────────────────┐  S14   ┌──────────────────────┐  S16
│ Generate first and   │        │ Generate prediction  │
│ second filter        │        │ signal               │
│ information          │        └──────────────────────┘
└──────────────────────┘
       │  S15
       ▼
┌──────────────────────┐
│ Perform entropy      │
│ coding on quantized  │
│ coefficients, and    │
│ first and second     │
│ filter information   │
└──────────────────────┘
       └──────────────┬───────────────┘
                      ▼
              ┌───────────────┐
              │     End       │
              └───────────────┘
```

## FIG. 4A

# FIG. 4B

Video coding processing

Perform entropy coding on coded signal — S21

Inversely quantize quantized coefficients — S22

Apply post filter to quantized prediction error signal and prediction signal — S23

Generate prediction signal — S24

End

## FIG. 5

EP 2 323 407 A1

## FIG. 6

EP 2 323 407 A1

FIG. 7

Video coding apparatus

EP 2 323 407 A1

## FIG. 8

## FIG. 9

EP 2 323 407 A1

## FIG. 10

# FIG. 11A

**Crew**
1280x720,4:2:0 @60Hz

Bit rate [kbps]

Legend:
- ○ H.264/AVC + Present Invention
- □ H.264/AVC

# FIG. 11B

**Dinner**
1920x1080,4:2:0 @30Hz

Bit rate [kbps]

Legend:
- ○ H.264/AVC + Present Invention
- □ H.264/AVC

**INTERNATIONAL SEARCH REPORT**

| International application No. |
| --- |
| PCT/JP2009/003086 |

A. CLASSIFICATION OF SUBJECT MATTER
H04N7/50(2006.01)i

According to International Patent Classification (IPC) or to both national classification and IPC

B. FIELDS SEARCHED

Minimum documentation searched (classification system followed by classification symbols)
H04N7/24-7/68

Documentation searched other than minimum documentation to the extent that such documents are included in the fields searched
| Jitsuyo Shinan Koho | 1922–1996 | Jitsuyo Shinan Toroku Koho | 1996–2009 |
| Kokai Jitsuyo Shinan Koho | 1971–2009 | Toroku Jitsuyo Shinan Koho | 1994–2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | WO 2007/111292 A1  (Matsushita Electric Industrial Co., Ltd.), 04 October, 2007 (04.10.07), Full text; all drawings & EP 1841230 A1      & KR 10-2009-0003272 A | 1–14 |
| A | JP 2006-211152 A  (National University Corporation Hokkaido University), 10 August, 2006 (10.08.06), Full text; all drawings (Family: none) | 1–14 |
| A | JP 10-150663 A  (Sony Electronics, Inc.), 02 June, 1998 (02.06.98), Full text; all drawings & US 5796875 A | 1–14 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 28 September, 2009 (28.09.09) | 06 October, 2009 (06.10.09) |

| Name and mailing address of the ISA/ Japanese Patent Office | Authorized officer |
| --- | --- |
| Facsimile No. | Telephone No. |

Form PCT/ISA/210 (second sheet) (April 2007)

**INTERNATIONAL SEARCH REPORT**

| International application No. |
|---|
| PCT/JP2009/003086 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 10-70717 A  (Matsushita Electric Industrial Co., Ltd.),<br>10 March, 1998 (10.03.98),<br>Full text; all drawings<br>& US 6249610 B1          & WO 1997/049250 A1 | 1-14 |
| A | JP 8-251418 A  (Kawasaki Steel Corp.),<br>27 September, 1996 (27.09.96),<br>Full text; all drawings<br>(Family: none) | 1-14 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1841230 A